# EUROPEAN PATENT APPLICATION

(11) **EP 4 631 658 A1**
(43) Date of publication of application: **15.10.2025**
(21) Application number: 25169389.1
(22) Date of filing: 09.04.2025
(51) Int. Cl.: B23D 47/04, B27B 5/18, B27B 31/00

(54) **CIRCULAR SAW**

(30) Priority: 10.04.2024 IT 202400007924
(71) Applicant: Ballario & Forestello S.r.l., 12030 Manta (CN) (IT)
(72) Inventor: Ballario, Gianluca, 12030 Manta (CN) (IT); Revelli, Lorenzo, 12030 Manta (CN) (IT)
(74) Representative: Bottino, Giovanni

(57) **Abstract**

Apparatus for cutting wood logs (4) comprising a support frame (1) on which support frame (1) a cutting element (2) and a log feed channel (11) are mounted, which feed channel (11) develops in a direction (A) perpendicular to the cutting plane (B) identified by said cutting element (2), so as to have a delivery zone (10) and a log exit zone (13), respectively upstream and downstream of said cutting element (2), so that the cutting element (2), through its cutting action, reduces the sizes of the logs inserted into the delivery zone (10).

Said feed channel (11) comprises means for dragging the logs (4) from the delivery zone (10) to the exit zone (13).

## Description

The present invention relates to an apparatus for cutting wood logs comprising a support frame on which a cutting element and a log feed channel are mounted.

The log feed channel develops in a perpendicular direction with respect to the cutting plane identified by said cutting element, so as to have a delivery zone and a log exit zone, respectively upstream and downstream of the cutting element, so that the cutting element, through its cutting action, reduces the sizes of the logs inserted in the delivery zone.

The one just described is the common configuration of the apparatuses for cutting logs known in the state of the art, which generally use circular saws to cut the logs.

Such apparatuses are in fact generally composed of a frame on which a circular saw blade is fixed, and a movable stand, pivoted to said frame around an articulation axis parallel to the rotation axis of the saw. The stand allows to receive the wood log to be cut and incline it towards the blade of the circular saw. The stand, in fact, can oscillate or rotate alternately between a rest position, in which it is far from the saw blade, and a cutting position, in which it is approached to the saw blade. The stand then performs an alternating rotational movement around the rotation axis, in two opposite rotation directions: the stand oscillates in the first rotation direction from the rest position towards the cutting position and secondarily the stand oscillates in the second rotation direction from the cutting position towards the rest position. In the rest position of the stand, the log is placed on the stand and is far from the saw blade, while in the cutting position the log placed on the stand is approached to the saw blade when the stand is inclined into the first rotation direction. After cutting, a part of the log remains in the stand and the other part of the cut log is removed. The remaining part of the log can then be cut again or ejected, depending on the sizes of the part itself. In the case of a new cut, the stand is returned to the rest position by inclining the stand in the second rotation direction and the log is repositioned on the stand by means of a manual translation movement along the stand. The operator will then have to carry out several manual operations. These various manual operations present safety hazards to the operator working in the vicinity of a rotating blade and slow down the cutting speed.

To meet current safety standards, some solutions known to the state of the art provide for a circular oscillating tripod saw comprising a case that allows the saw blade to be surrounded and a claw mounted on the tripod that allows the log to be retained during cutting. As a result, the operator is protected by the saw blade and no longer needs to manually hold the log during cutting.

The latest apparatus for cutting logs solutions involve automating the entire cutting process.

The automatic circular saws currently on the market are equipment that optimise and automate the preparation of firewood.

These machines allow to automatically obtain pieces of wood of the desired length, starting from a more or less long section of log that may have been previously split.

The operator will therefore have the sole task of setting the cutting length to be obtained and of feeding the machine through the mobile stand. The machine will then perform the cutting. The log will be ejected by gravity and a new cut will be made, until the inserted log is completely ejected.

This automatic cycle will be repeated until the equipment no longer detects a section of log to be cut.

The entire automatic cycle is therefore obtained thanks to gravity, that is, it is gravity that displaces the logs from the log delivery zone to the log exit zone, along the feed channel.

The exploitation of gravity requires the apparatuses known in the state of the art to incline the feed channels according to certain angles.

Therefore, the apparatuses known in the state of the art must have certain production constraints.

In addition, since the logs to be cut do not have a straight course, nor smooth surfaces due to the presence of the common knots of wood, they do not slide inside the feed channel, blocking the cutting action.

Interrupting the cutting action has obvious disadvantages from the point of view of the safety of the operator, who must intervene manually to push the log towards the cutting element.

The safety of the operator is therefore put at risk in machinery where this safety is already partially compromised due to the tilting stand that risks putting the operator in contact with the cutting element.

In addition to operator safety problems, repeated interruptions in cutting operations cause significant slowdowns in the activity to be carried out, slowdowns that have inevitable repercussions on the costs of cutting logs.

There is therefore a need not met by the systems known in the state of the art to make an apparatus for cutting logs that performs automatic cutting operations, without the need for the operator to manually intervene to displace the logs within the feed channel, thus maintaining a high level of safety for the operator himself.

The present invention achieves the above objects by realising an apparatus as described above, wherein the feed channel comprises means for dragging the logs from the delivery zone to the exit zone.

These dragging means facilitate the advancement of the piece to be cut towards the system that will start the cutting cycle.

Furthermore, as will be evident from the illustration of some embodiments, the apparatus subject-matter of the present invention is much simpler, both from the point of view of use, and with regard to the maintenance that the operator will have to do during the entire life of the machine.

A further particularly advantageous aspect is related to the increase in the productivity of the apparatus, since machine downtime is limited.

Thanks to this feature, the operator must limit himself to setting the desired cutting length and feeding the machine with sections of log to be cut.

It is possible to include any cutting element known in the state of the art, such as for example saws of any type or even cutting wedges.

Preferably, in order to further improve the constructional simplicity as well as the cutting efficiency, the cutting element consists of a circular saw.

According to a possible embodiment, the cutting element is mounted displaceable with respect to the support frame, along a direction parallel to the cutting plane, so as to pass from a retracted condition to an extracted condition.

In the extracted condition, the cutting element occupies, at least in part, the feed channel, such that in the passage from the retracted condition to the extracted condition, the cutting element reduces the sizes of said logs.

Such a configuration allows to realize a fixed feed channel, that is, which does not have to oscillate, as the movement is guaranteed by the cutting element, which feature further increases the safety of the apparatus of the present invention.

According to an improvement, the dragging means are positioned upstream of the cutting element.

From a constructive point of view, this positioning optimizes the pushing action carried out on the logs inserted in the delivery zone.

As anticipated, one of the objects of the present invention is to achieve a fully automated cutting procedure, limiting the operator's actions to only inserting the logs.

For this reason, according to an improvement, there is provided a system for detecting the presence of logs inside the feed channel, which detection system is connected to means for activating/deactivating the cutting element.

This feature is particularly advantageous in combination with the displacement of the cutting element.

In fact, the presence sensor can activate the cutting element so as to maintain the retracted condition of the cutting element in the event of the absence of logs within the feed channel.

In this way, the operator will have the assurance that he will not run the risk of coming into contact with the cutting element in the event that the logs are not delivered into the feed channel.

At the same time, as long as logs are present inside the feed channel, the cutting element will be in operation, whereby the operator will avoid interacting with the feed channel until all logs are ejected from the feed channel.

According to an improvement, a cover element of the exit zone of the feed channel is provided, which is mounted oscillating with respect to the feed channel, so as to pass from an open condition, in which it allows the passage of the cut logs from the exit zone, to a closed condition, in which it keeps the logs in position inside the feed channel, and vice versa.

The cover element performs a double function, as it allows the exit of the cut log parts from the cutting element, but at the same time, in a closed condition, it acts as a stop element, that is, it sets a lower limit to the insertion of the log, preventing the log, before cutting, from exiting the exit zone.

This aspect is particularly advantageous in combination with the embodiment variant of the apparatus subject-matter of the present invention which provides that the cover element is translatably mounted on the support frame, along a direction parallel to the direction of development of the feed channel.

In this way, the cover element also allows to adjust the length of the portion of the log that it is wished to cut.

Advantageously, the feed channel comprises a log locking element, which passes from an active locking condition to an inactive locking condition.

The active locking condition is activated prior to cutting the logs, so as to facilitate the work of the cutting element, as the locking element keeps the log stationary, so that the interpenetration of the cutting element inside the log is easier.

This reduces wear on the cutting element, especially where the cutting element is a circular saw, as cutting a fixed log creates less vibration on the rotation fulcrum of the circular saw.

Finally, according to a further embodiment, the dragging means comprise at least one roller positioned inside the feed channel which roller has on its outer surface a plurality of teeth engaging with the outer surface of the logs.

This variant confers further constructional simplicity, as it is sufficient to create a slit inside the feed channel into which to insert the roller.

The dragging means will therefore act exclusively along the length of the slit, obtaining a thrust of the log without creating impediments to the movement of the cutting element.

As described above, the present invention aims to realize an apparatus for cutting logs able to work in automatic mode and able to guarantee a high level of safety for the operator.

To solve this purpose, as previously reported, a first feature envisages realizing an automatic dragging of the logs inside the feed channel.

A second feature, on the other hand, is related to the realization of a cutting element that moves in the feed channel, leaving the feed channel fixed.

For this reason, the present invention also relates to an apparatus for cutting wood logs comprising a support frame on which a cutting element and a log feed channel are mounted.

The feed channel develops perpendicular to the cutting plane identified by said cutting element, so as to have a delivery zone and a log exit zone, respectively upstream and downstream of the cutting element, so that the cutting element, through its cutting action, reduces the sizes of the logs inserted into the delivery zone.

In particular, the cutting element is mounted displaceable with respect to the support frame along a direction parallel to the cutting plane, so as to pass from a retracted condition to an extracted condition.

In the extracted condition, the cutting element occupies at least part of the feed channel, so that in the passage from the retracted condition to the extracted condition, the cutting element reduces the sizes of the logs.

As described above, the cutting element will be activated in such a way that, when the operator has to insert logs into the delivery zone, the cutting element will be in a retracted condition, so as to avoid the risk of the operator coming into contact with the cutting element, injuring himself.

Also for the version of the apparatus with the displaceably mounted cutting element, one or more of the characteristics described above can be provided, to be provided alternatively or in combination.

These and other features and advantages of the present invention will become clearer from the following disclosure of some exemplary embodiments illustrated in the accompanying drawings, wherein:
figures 1a and 1b illustrate two views of a possible embodiment of the apparatus that is the subject-matter of the present invention;
figure 2 illustrates a detail of the feed channel with a log inserted into the delivery zone;
figures 3a to 3c illustrate three views of the cutting element according to three different operating conditions;
figure 4 illustrates a detail of the feed channel belonging to the apparatus subject-matter of the present invention;
figure 5 illustrates a specific view of the feed channel belonging to the cutting apparatus subject-matter of the present invention.

It is specified that the figures attached to the present patent application illustrate only some possible embodiments of the cutting apparatus subject-matter of the present invention, to better understand the advantages and features disclosed.

Such embodiments are therefore to be understood as purely illustrative and not limiting to the inventive concept of the present invention, namely that of an apparatus for cutting logs that performs automatic cutting operations, without the need for the operator to manually intervene for the displacement of the logs inside the feed channel, thus maintaining a high level of safety for the operator himself.

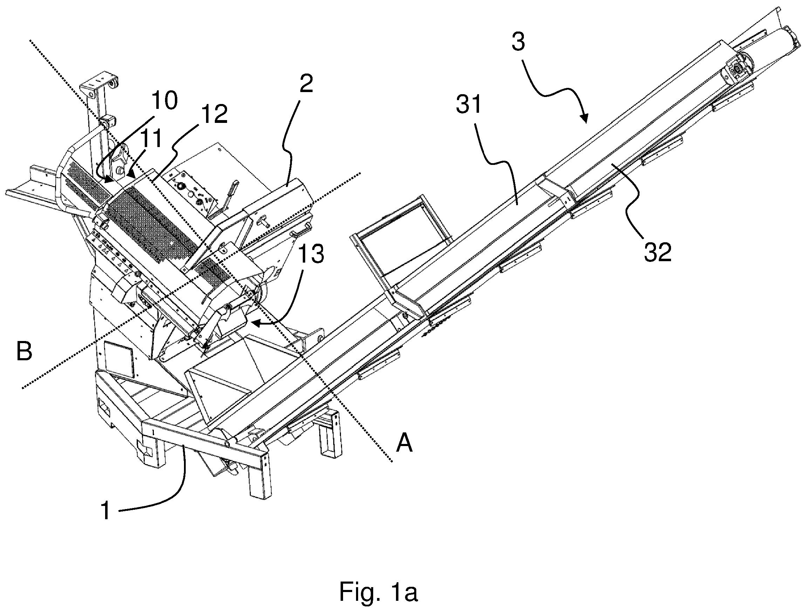

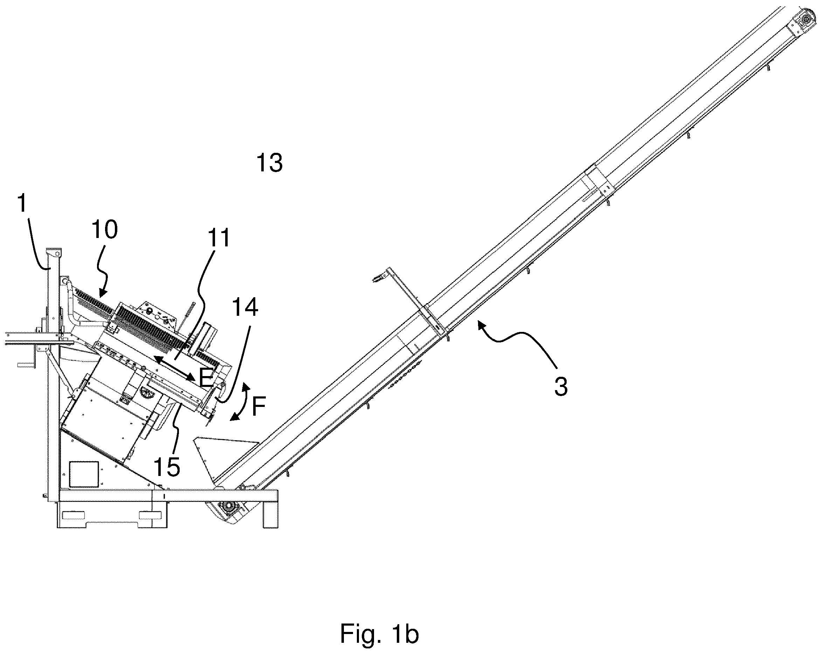

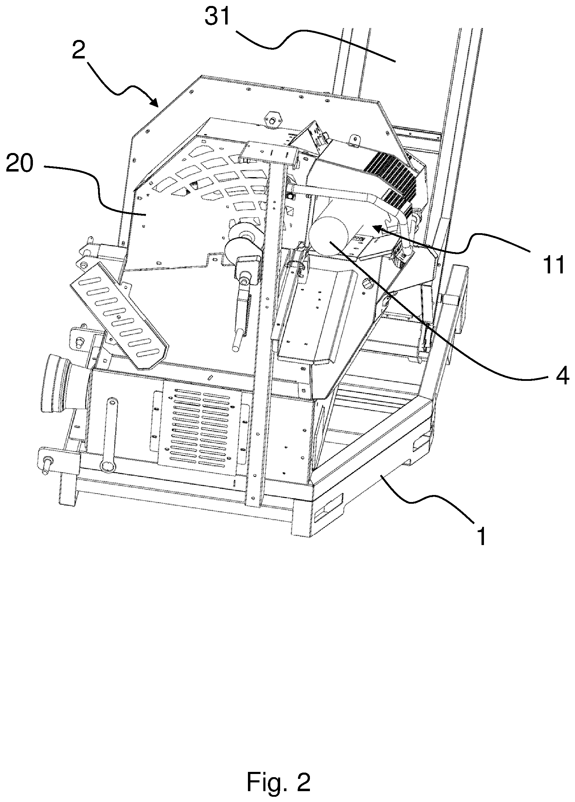

With particular reference to figures 1a, 1b and 2, some views of the apparatus for cutting logs subject-matter of the present invention according to a preferred embodiment are illustrated.

The apparatus comprises a support frame 1 on which a cutting element and a log feed channel 11 are mounted.

The support frame 1 is made in any of the ways known in the state of the art and is configured so as to be able to support the different components of the cutting apparatus.

From a macroscopic point of view, the apparatus subject-matter of the present invention comprises a cutting portion 2 flanked by a portion for inserting and sliding the logs 4, which comprises the feed channel 11.

In addition, the support frame 1 supports an element for collecting and distributing the cut logs 3, consisting of an upright 32 on which a conveyor belt 31 runs.

As with the apparatuses known in the state of the art, the upright 32 can be provided telescopic or dismountable, so as to reduce its sizes during transport and be explained as in the variant illustrated in Figures 1a and 1b, during use of the apparatus.

The logs are then inserted at the beginning of the feed channel 11, i.e. at a delivery zone 10, they slide along the feed channel to be processed, so as to exit the exit zone 13.

Thanks to the action of the cutting portion 2, the logs 4 are reduced in size.

Therefore, at the exit zone 13, the logs reduced in size fall onto the conveyor belt 31 that transports them to the top of the distribution and collection element 3, so that they can fall to the ground and be stacked by an operator.

Preferably, with particular reference to the side view of Figure 1b, the first part of the apparatus comprising the cutting portion 2 and the feed channel 11 is inclined with respect to the horizontal plane on which the support frame 1 rests, just as the collection and distribution element 3 is inclined.

The feed channel 11 and the element 3 are arranged so as to form a "V" shape.

Furthermore, with particular reference to Figure 1a, the feed channel 11 develops along the direction A, which is perpendicular to the direction B, on which the cutting plane identified by the cutting element lies.

The logs 4 are then inserted into the feed channel 11 with their longitudinal axis parallel to the axis A, while the cutting element makes cuts perpendicular to the axis A, so as to reduce the length of the logs 4 from the delivery zone 10, positioned upstream of the cutting element, to the exit zone 13, positioned downstream of the cutting element.

The feed channel 11 preferably has a protective casing 12 configured to surround the feed channel 11 so as to prevent the operator from coming into contact with the cutting element during the cutting operations and, at the same time, to prevent wood chips from being projected outside the feed channel 11.

Furthermore, with particular reference to Figure 1b, the feed channel 11 has a cover element 14, located at the end of the feed channel 11 at the exit zone 13.

This cover element 14 is mounted on the feed channel 11 in a translatable manner, i.e. it can be displaced along the direction indicated by the arrow E.

The cover element 14 can therefore be moved away/closer to the exit of the feed channel 11, through the arm 15 integral with the feed channel 11 which has a slide integral with the cover element 14 that slides with respect to the arm 15 along the direction indicated by the arrow E.

Displacing the cover element 15 allows the length of the cutting of the logs 4 to be adjusted.

In fact, the log 4 is inserted inside the feed channel 11 and slides inside said channel 11 until it comes into abutment with the cover element 14.

As a result, the distance of the cover element 14 from the exit of the feed channel 11 adjusts the length of the logs exiting the feed channel.

The cover element 14, in addition to translating along the direction E, is mounted through a fulcrum on the arm 15 so as to oscillate along the directions indicated by the arrow F.

The cover element 14, during the oscillation, opens and closes the feed channel 11.

In an open condition, the cut logs can be positioned in the exit zone 13 and then be collected by the collection and distribution element 3, while in a closed condition, illustrated in Figure 1b, the log will be in abutment with the cover element 14.

As is evident, during the cutting the cover element 14 will always be in a closed condition, while, once the cutting is finished, the cover element 14 will be open.

Said movement is preferably regulated by a central control unit that coordinates the operation of all the components, as will be described below.

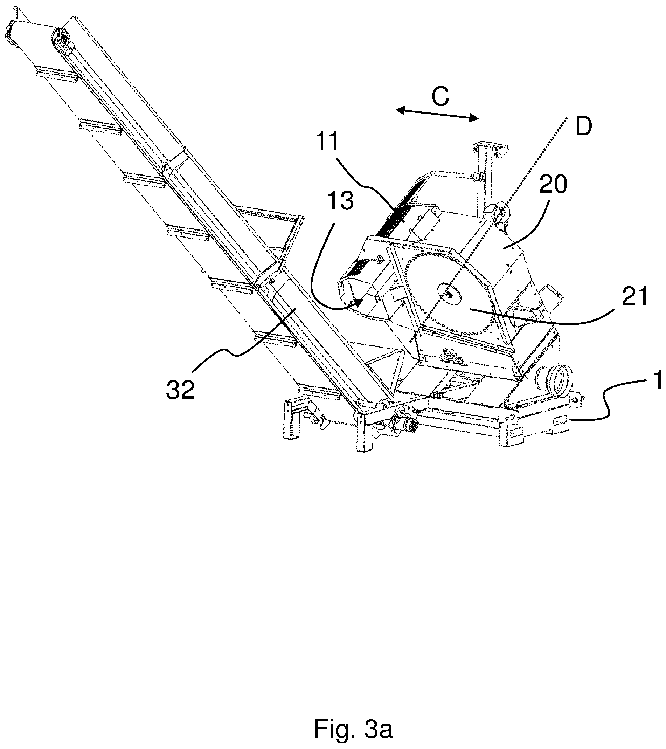

In fact, one of the main kinematics of the apparatus subject-matter of the present invention relates to the movement of the cutting element, illustrated in figures 3a to 3c.

The cutting element preferably consists of a rotating circular blade 21.

The rotating blade 21 rotates around an axis of rotation D and, precisely thanks to this rotation, when it comes into contact with the log 4, it saws the log itself, until it divides the log 4 into two parts.

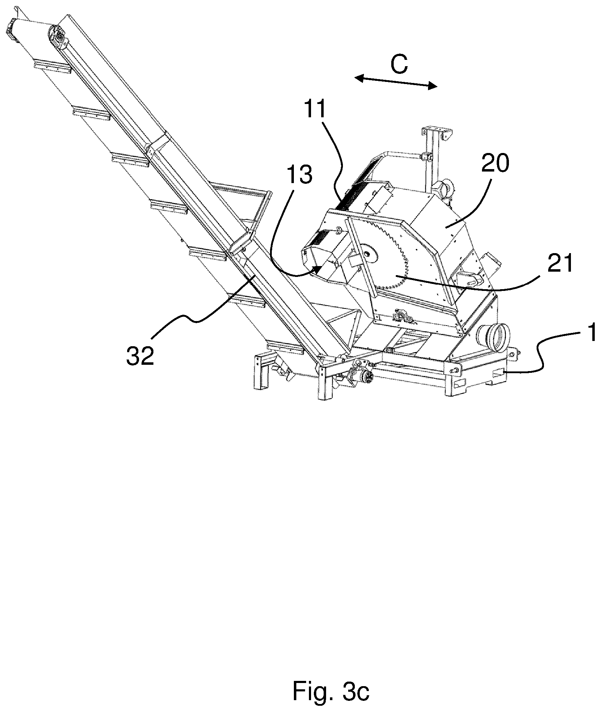

Furthermore, the rotating blade 21 is mounted so as to be able to translate along the direction indicated by the arrow C, so as to pass from a retracted condition, illustrated in figure 3a, to an extracted condition, figure 3c.

In the retracted condition, Figure 3a, the rotating blade is completely inserted into the protective casing 20 without occupying, even in part, the feed channel 11.

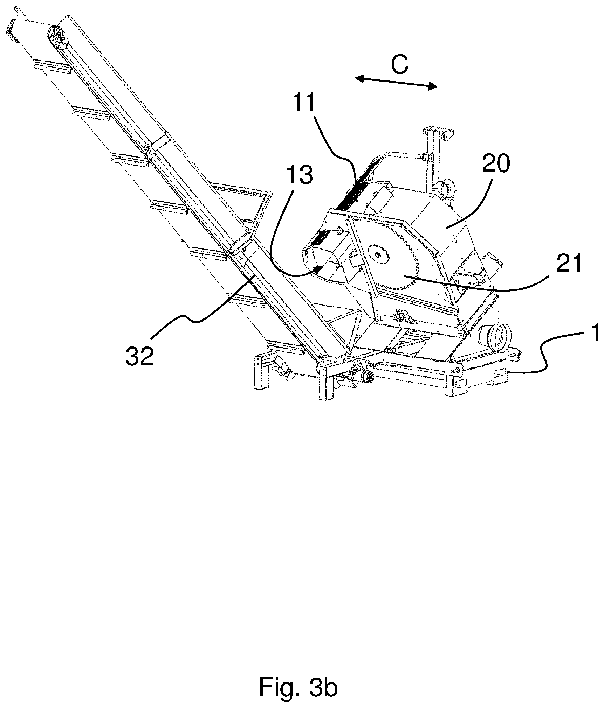

In the passage from the retracted condition to the extracted condition, Figure 3b, the circular blade 21 begins to move, translating from the protective casing 20 towards the feed channel 11.

It is therefore possible to provide that the protective casing 20 has a slit with an opening towards the feed channel 11, so that the rotating blade 21, during translation along the arrow C, can easily penetrate the feed channel 11.

In figure 3c the rotating blade 21 is in an extracted condition, it has completed the entire translation path.

The rotating blade 21, starting from the retracted condition, is moved to be extracted, comes into contact with the log and, in the extracted condition of Figure 3c, makes a complete cut of the log 4.

It is evident that the rotating blade 21 will come into contact with the log 4 at different times, based on the width of the log 4 to be cut.

Advantageously, the cutting apparatus subject-matter of the present invention is adjusted so that the rotating blade 21, in the extracted condition of figure 3c, is close to the inner walls of the feed channel 21, without coming into contact with them, so as to ensure a complete cut of the log 4 inserted inside the feed channel 11.

The displacement of the rotating blade 21 can be obtained in any of the ways known in the state of the art.

Preferably, however, the rotating blade 21 is mounted within the apparatus on a tilting frame, hinged by two supports at the bottom of the support frame 1.

This allows the rotating blade 21 to travel a circular trajectory with respect to the fulcrum, by means of a hydraulic cylinder, which provides for the forward and backward displacement of the rotating blade 21.

In addition, the feed channel 11 comprises means for dragging the log inserted into the delivery zone of the feed channel 11 itself.

These dragging means allow to displace, along the feed channel 11, the log 4, until the log 4 comes into abutment with the cover element 14.

The dragging means can work in combination with gravity, aiding the displacement of the log obtained by inclination of the feed channel 11 with respect to the horizontal plane on which the support frame rests.

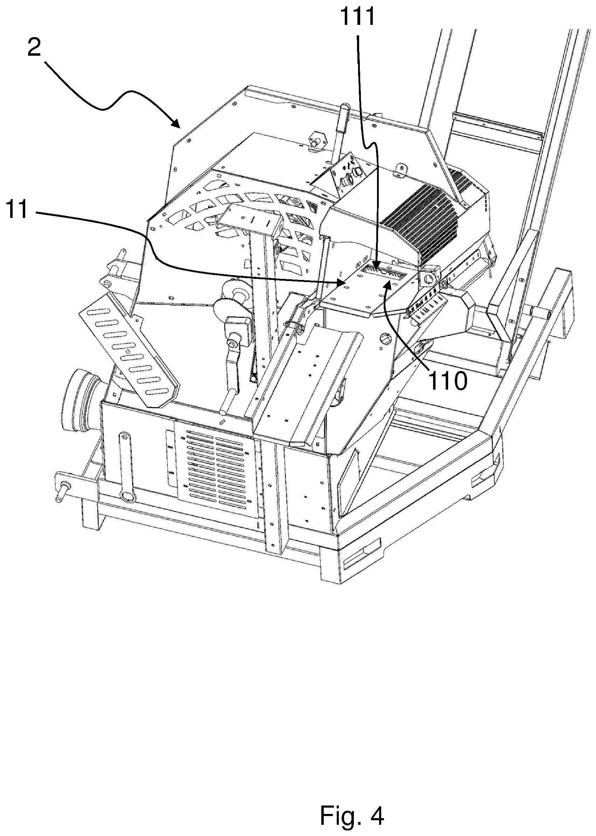

According to the variant illustrated in figure 4, the dragging means comprise a roller 110 positioned inside the feed channel 11, which roller has on its outer surface a plurality of teeth 111 engaging with the outer surface of the logs 4.

According to the illustrated embodiment, the roller 110 is positioned in front of the circular blade 21 with respect to the entry zone 10 of the feed channel 11.

The log 4 is then inserted inside the feed channel 11 and after a certain sliding of the log, the teeth 111 engage with the outer surface of the log, pushing it towards the cover element 14.

The roller 110 and, in particular, the teeth 111 extend in a radial direction inwards of the feed channel 11 thanks to a slot obtained in the inner walls of the feed channel 11, as illustrated in figure 4.

The operation of the cutting apparatus subject-matter of the present invention is preferably automated, thanks to the presence of a control unit.

The control unit generates command signals for the various components of the cutting apparatus, based on information detected by a sensor system configured to detect the presence of the log 4 within the feed channel 11.

The sensor system comprises one or more sensors positioned at the exit zone 13.

Preferably, the one or more sensors are positioned at the cover element 13.

Starting from the retracted condition of the rotating blade 21, the log is inserted inside the feed channel 11: the feed channel 11 is free, as the rotating blade 21 has not yet been inserted inside the feed channel 11.

The log 4 slides along the length of the feed channel 11, the teeth 111 of the roller 110 engage with the outer surface of the log 4: the rotation of the roller 110 pushes the log towards the exit zone 13.

The roller 110 continues to rotate and push the log 4 until the sensor or sensors detect its presence.

In the case where the sensor or sensors are placed on the cover element 14, the roller 110 ends its dragging action when the log 4 is in abutment with the cover element 14.

Once the dragging action of the dragging means is ended, the rotating blade 21 is displaced in the direction of the feed channel 11, starting from the retracted condition of Figure 3a.

In addition, the rotating blade 21, by rotating around the axis D, as soon as it comes into contact with the log 4 begins to cut the log 4 until it is divided into two pieces.

During the cutting procedure, i.e. during the displacement of the rotating blade 21, the cover element 14 remains in the closed condition of the feed channel 11.

Once the log 4 is divided into two pieces, the rotating blade 21 begins to return towards the retracted condition: a sensor identifies this condition and generates a command signal to open the cover element 14, so that the cut log piece 4 can fall towards the collection and distribution element 3.

The cover element 14 is then returned to the closed condition.

Meanwhile, while the rotating blade 21 returns towards the retracted condition, the roller 110 begins to rotate again to drag the log 4 towards the exit zone 13 of the feed channel 11.

A further sensor may be provided for detecting the presence of the log at a position between the delivery zone 10 and the cutting plane within the feed channel.

In the case of detection of the presence of the log 4, the cutting cycle described above restarts, and the cycle will be repeated until the presence of the log in the zone between the delivery zone 10 and the cutting plane is detected.

If the presence of the log 4 is not detected in the zone between the delivery zone 10 and the cutting plane, the cover element 14 is opened so that the remaining part of the log, reduced in size, can exit the feed channel 11 and fall onto the conveyor belt 31 of the collection and distribution element 3.

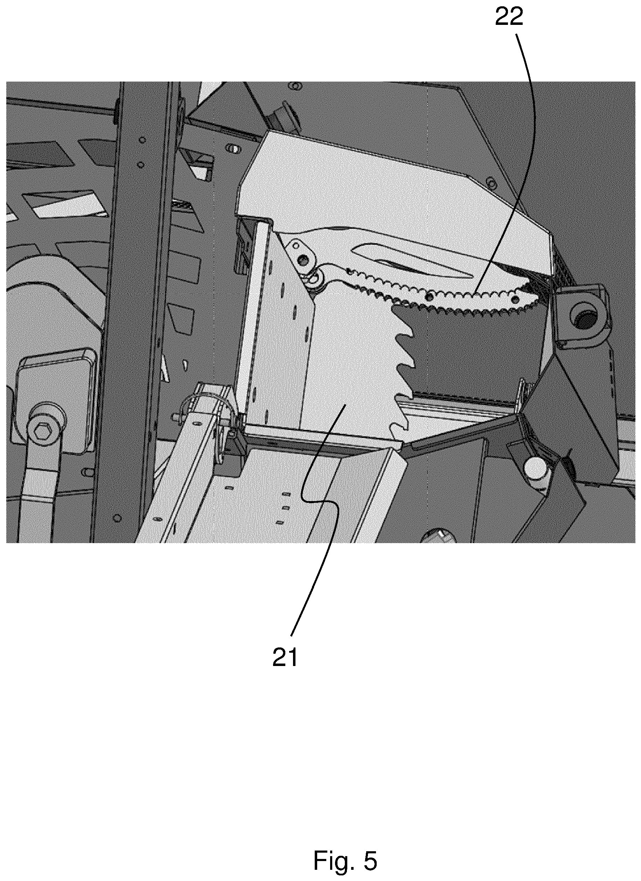

According to a further embodiment illustrated in figure 5, a locking element 22 is present inside the feed channel.

The locking element 22 participates in the automatisms described above, such that, once the log 4 is in place to be cut, before the cutting of the rotating blade 21 begins, the locking element 22 locks the log 4 in place.

According to the variant illustrated in figure 5, this locking element 22 consists of a toothed clamp, which mechanically moves through a series of levers, mounted on the tilting frame of the rotating blade 21, in such a way that, when the rotating blade 21 moves forward in the direction of the feed channel 11, they proportionally close the clamp, locking the log and keeping it stationary during cutting.

Finally, it is specified that, based on what has just been described, it is evident that the operation of the cutting apparatus subject-matter of the present invention is not limited to cutting a single log, but two or more logs can be cut simultaneously.

While the invention is subject to various modifications and alternative constructions, some preferred embodiments have been shown in the drawings and described in detail.

It should be understood, however, that there is no intention to limit the invention to the specific illustrated embodiment but, on the contrary, the aim is to cover all the modifications, alternative constructions and equivalents falling within the scope of the invention as defined in the claims.

The use of "for example", "etc.", "or" indicates non-exclusive alternatives without limitation, unless otherwise indicated.

The use of "includes" means "includes, but not limited to" unless otherwise indicated.

## Claims

1. Apparatus for cutting wood logs (4) comprising a support frame (1) on which support frame (1) a cutting element (2) and a log feed channel (11) are mounted, which feed channel (11) develops in a direction (A) perpendicular to the cutting plane (B) identified by said cutting element (2), so as to have a delivery zone (10) and a log exit zone (13), respectively upstream and downstream of said cutting element (2), so that the cutting element (2), through its cutting action, reduces the sizes of the logs inserted into the delivery zone (10),
**characterized in that**
said feed channel (11) comprises means for dragging the logs (4) from the delivery zone (10) to the exit zone (13).

2. Apparatus according to claim 1, wherein said cutting element (2) is mounted displaceable with respect to said support frame (1) along a direction (B) parallel to the cutting plane, so as to pass from a retracted condition to an extracted condition, in the extracted condition the cutting element occupying at least in part the feed channel (11), so that in the passage from the retracted condition to the extracted condition the cutting element reduces the sizes of said logs (4).

3. Apparatus according to claim 1 or claim 2, wherein said dragging means are positioned upstream of said cutting element (2).

4. Apparatus according to one or more of the preceding claims, wherein there is provided a system for detecting the presence of logs inside the feed channel (11), which detection system is connected to means for activating/deactivating said cutting element (2).

5. Apparatus according to one or more of the preceding claims, wherein a cover element (14) of the exit zone (13) of the feed channel (11) is provided, which cover element (14) is mounted oscillating with respect to said feed channel, so as to pass from an open condition, in which it allows the passage of the cut logs from the exit zone to a closed condition, in which it keeps the logs in position inside the feed channel, and vice versa.

6. Apparatus according to claim 5, wherein said cover element (14) is translatably mounted on said support frame (1) along a direction parallel to the direction of development of the feed channel (11).

7. Apparatus according to one or more of the preceding claims, wherein said feed channel (11) comprises a log locking element (22), which locking element (22) passes from an active locking condition to an inactive locking condition, the active locking condition being activated prior to cutting the logs.

8. Apparatus according to one or more of the preceding claims, wherein said dragging means comprise at least one roller (110) positioned inside the feed channel (11), which roller (110) has on its outer surface a plurality of teeth (111) engaging with the outer surface of the logs.

9. Apparatus for cutting wood logs comprising a support frame (1) on which support frame (1) a cutting element (2) and a log feed channel (11) are mounted, which feed channel (11) develops in a direction (A) perpendicular to the cutting plane (B) identified by said cutting element (2), so as to have a delivery zone (10) and a log exit zone (13), respectively upstream and downstream of said cutting element, so that the cutting element, through its cutting action, reduces the sizes of the logs inserted into the delivery zone,
**characterized in that**
said cutting element is mounted movable with respect to said support frame along a direction parallel to the cutting plane, so as to pass from a retracted condition to an extracted condition, in the extracted condition the cutting element occupying at least in part the feed channel, such that in the passage from the retracted condition to the extracted condition, the cutting element reduces the sizes of said logs.

10. Apparatus according to claim 9, wherein said apparatus is made according to one or more of claims 1 to 8.
